# EUROPÄISCHE PATENTSCHRIFT

(11) **EP 0 724 844 B1**
(45) Veröffentlichungstag und Bekanntmachung des Hinweises auf die Patenterteilung: **30.05.2001**
(21) Anmeldenummer: 96100811.7
(22) Anmeldetag: 20.01.1996
(51) Int. Cl.: A23L 1/318, A23L 1/314, A23B 4/20, A23B 4/12

(54) **Rohpökelerzeugnis aus Fleisch und Verfahren zu seiner Herstellung**
Cured raw meat product and process for producing it
Produit de viande cru et salé et procédé pour sa préparation

(30) Priorität: 02.02.1995 DE 19503222
(43) Veröffentlichungstag der Anmeldung: 07.08.1996
(73) Patentinhaber: H. & E. Reinert KG Westfälische Privat-Fleischerei, 33775 Versmold (DE)
(72) Erfinder: Klemend, Uwe, Dipl.-Ing., D-33739 Bielefeld (DE); Lembke, Gunther H., Dipl.-Ing., D-49186 Bad Iburg (DE); Treitz, Patrick, Dipl.-Ing., D-66687 Wadern (DE)
(74) Vertreter: Stracke, Alexander, Dipl.-Ing.

(56) Entgegenhaltungen:
- EP-A- 0 058 856
- EP-A- 0 063 303
- EP-A- 0 442 361
- EP-A- 0 572 305
- EP-A- 0 586 939
- DE-A- 3 500 914
- DE-A- 4 035 836
- US-A- 3 193 391
- US-A- 4 303 679
- PATENT ABSTRACTS OF JAPAN vol. 011, no. 192 (C-429), 19.Juni 1987 & JP-A-62 014738 (INOUE SHOKUHIN KK), 23.Januar 1987,
- PATENT ABSTRACTS OF JAPAN vol. 015, no. 456 (C-0886), 20.November 1991 & JP-A-03 195473 (CALPIS FOOD IND CO LTD:THE;OTHERS: 01), 27.August 1991,

## Beschreibung

Die vorliegende Erfindung betrifft ein Rohpökelerzeugnis aus stückigem Fleisch, insbesondere einen Lachsschinken, sowie ein Verfahren zur Herstellung eines derartigen Rohpökelerzeugnisses.

Derartige Rohpökelerzeugnisse, insbesondere auch Lachsschinken, werden üblicherweise eingesalzen, unterliegen dann einer sogenannten Brennphase, in der in Lösung gegangenes Salz das Fleischstück durchdringt und werden dann im Klimaraum unter vorgegebenen Betriebsbedingungen gereift. Es ist bei der Herstellung von Schinkenspezialitäten auch eine Naturreifung bekannt, bei der sich auf der Oberfläche des Schinkens eine Beschimmelung ausbildet.

Es ist bei Rohpökelprodukten bekannt (EP-A-0 063 303, DE-A-40 35 836, US-A-3 193 391), durch Starterorganismen die Säuerung des Fleischstücks, die Umrötung und eine Aromabildung zu initiieren. Letztere beruht unter anderem auch auf dem enzymatischen Abbau von Nährstoffen, insbesondere Proteinen, mit Hilfe von aus den Mikroorganismen sekretierten Enzymen. Eine Beschimmelung der Oberfläche erfolgt spontan, wobei die sogenannte Beschimmelung im wesentlichen aus Hefe besteht.

Es ist ferner bei der Herstellung von Rohwürsten bekannt (EP-A-0 586 939), pulverisierten Camembert ins Brät zu verarbeiten, wo er als Gewürz wirkt und durch ihn die gekutterte Masse ein Camembert-Aroma erhält. Bei der bekannten Rohwurst erfolgt nach der Umrötung eine Beschimmelung mit Edelschimmelkulturen. Es gehört zum Wesen einer derartigen Wurstherstellung im Sinne einer Haltbarkeit, Stoffwechselvorgänge infolge der Zugabe von Camembertpartikeln in das Wurstbrät nach Möglichkeit zu unterbinden.

Der vorliegenden Erfindung liegt die Aufgabe zugrunde, ein Rohpökelerzeugnis aus stückigem Fleisch zu schaffen, das sich durch ein neues, unverwechselbar feines Aroma bei guter Haltbarkeit auszeichnet. Der Erfindung liegt ferner die Aufgabe zugrunde, ein Verfahren zur Herstellung eines derartigen Rohpökelerzeugnisses aus stückigem Fleisch, insbesondere eines Lachsschinkens, aufzuzeigen.

Die erfindungsgemäße Lösung bezüglich des Rohpökelerzeugnisses aus stückigem Fleisch ergibt sich aus dem Anspruch 1. Zweckmäßige Ausgestaltungen bezüglich des Aufschlusses des Außenbereiches des Fleischstückes sind in Unteransprüchen gekennzeichnet.

Es hat sich überraschend gezeigt, daß die proteolytische, d. h. eiweißspaltende, und die lipolytische, d. h. fettspaltende Aufschließung des Außenbereiches des mit pulverisiertem Weichkäse in einer Pökelung behandelten Fleisches eine optimale Beschimmelung mit Edelschimmelkulturen ermöglicht. Es hat sich dabei ferner herausgestellt, daß in der nachfolgenden Brennphase dann, wenn das Salz in Lösung gegangen ist, das Salz die Geschmacksaromen des Käses mit in das Innere des Fleischstückes hinein nimmt, so daß das Erzeugnis, insbesondere der Lachsschinken, in seiner Gesamtheit, also auch in seinem Inneren, ein unverwechselbar feines Aroma hat. Dazu trägt auch die Beschimmelung mit den Edelschimmelkulturen bei, die sich auf dem aufgeschlossenen Außenbereich des Fleischstückes optimal ausbilden können.

Gemäß einer besonders bevorzugten Ausführungsform ist ein Aufschluß zusätzlich mit pH-Wert senkenden Starterkulturen vorgesehen. Die Pökelung unter Mitverwendung des pulverisierten Weichkäses führt zu einer alkalischen, pH-Wert erhöhenden Reaktion im Fleischstück, der mit derartigen Starterkulturen im Sinne einer Optimierung der Haltbarkeit des Produktes durch Absäuerung, d. h. pH-Wert-Senkung entgegengewirkt werden kann. Es hat sich dabei auch gezeigt, daß durch diese gesteuerte Absäuerung insgesamt ein Schutz vor unerwünschten Mikroben gegeben ist und auch diese spezielle Kombination dieser Starterkulturen mit der Pökelung unter Mitverwendung von pulverisiertem Weichkäse zum unverwechselbaren Aroma beiträgt.

Die erfindungsgemäße Lösung bezüglich des Verfahrens besteht darin, daß das ausgelöste Fleischstück mit Salz und pulverisiertem Weichkäse gepökelt wird danach einer Brennphase unterworfen wird, das Fleischstück danach in eine Edelschimmel-Suspension getaucht wird, das Fleischstück dann einer Beschimmelungsphase unterworfen wird und sich daran eine klimatisierte Reifephase anschließt.

Zur ausgeprägten, unverwechselbaren Aromabildung trägt mit bei, die Gesamtdauer des genannten Verfahrens auf ca. 4-6 Wochen zu erstrecken. Im Gegensatz dazu beträgt die Herstellungszeit üblichen Lachsschinkens 3 bis maximal 7 Tage. Der Zeitfaktor trägt mit dazu bei, daß das Produkt seine speziellen und unverwechselbaren Geruchs- und Geschmacksstoffe ausbilden kann, und zwar im Fleischstück in seiner Gesamtheit.

Ein Ausführungsbeispiel sei nachfolgend im Zusammenhang mit der Herstellung eines Rohpökelerzeugnisses aus Fleisch in Form eines Lachsschinkens (Rückenmuskel des Schweines) näher beschrieben.

Der ausgelöste Rohschinken wird zunächst unter Beigabe von pulverisiertem Weichkäse, insbesondere pulverisiertem Camembert und einer Starterkulturenmischung, mit dem Salz in einer Trommel behandelt, um die Pökelmischung in das Fleisch einzumassieren. Danach werden die Rohschinkenstücke in Pökelbehältern eingelagert. Die Korngröße des pulverisierten Weichkäses sollte kleiner als 0,5 mm sein. Die Temperatur des pulverisierten Weichkäses sollte zum Zeitpunkt seiner Beigabe unter 0° C liegen. Es hat sich eine Kombination von etwa 40 - 70 g Salz mit 10 - 50 g Weichkäse, in Abhängigkeit der Größe der einzupökelnden Teilstücke, als zweckmäßig erwiesen.

Es werden Starterkulturen eingesetzt, deren Mikroorganismen eine gesteuerte Absäuerung, d. h. also eine pH-Wert-Senkung hervorrufen, um der pH-Wert-Erhöhung durch die Wirkung des Weichkäses entgegenzuwirken, insgesamt einen Schutz vor unerwünschten Mikroben zu erreichen und eine hohe Haltbarkeit des Produktes zu gewährleisten. In diesem Sinn hat sich als Starterkulturenmischung eine Mischung aus Laktobacillus sake und Pediococcus pentosaceus als besonders zweckmäßig erwiesen.

An die Pökelphase als ersten Schritt des Herstellungsverfahrens schließt sich als zweiter Schritt die sogenannte Brennphase an, in der wie bei der Schinkenherstellung generell üblich, in Lösung gegangenes Salz tief in den Rohschinken eindringt und dabei in diesem Fall die vorhandenen Käsearomen mit in das Fleischinnere nimmt und dort gleichmäßig verbreitet. Der Rohschinken wird in dieser Brennphase entweder liegend oder hängend aufbewahrt und zwar zweckmäßig klimatisiert bei Temperaturen von 0 - 7° C, einer relativen Luftfeuchtigkeit von 90 - 70 % und einer Luftgeschwindigkeit von 0,2 - 2 m/s.

Die alkalische Reaktionen hervorrufenden Mikroorganismen des Weichkäses rufen im Außenbereich des Fleisches des Rohschinkens proteolytische, d. h. eiweißspaltende und lypolytische, d. h. fettspaltende Reaktionen hervor, verbunden mit einem Ansteigen des pH-Wertes. Es hat sich gezeigt, daß ein derartiger Aufschluß des Außenbereiches des Fleisches eine spätere Beschimmelung mit speziellen Starterkulturen optimal möglich macht.

Als dritter Schritt des Herstellungsverfahrens schließt sich ein Eintauchen des Schinkens in eine Suspension einer speziellen Edelschimmelkulturmischung an, als Ausgangspunkt für eine Beschimmelung mit Edelschimmel. Eine Tauchmasse mit Penicillium nalgiovense und Penicillium candidum hat sich als besonders geeignet erwiesen.

Nach dem Eintauchen in die Suspension erfolgt als vierter Schritt des Herstellungsverfahrens die Beschimmelung in einem speziellen, klimatisierten Behandlungsraum. Für die Beschimmelungsphase haben sich eine Klimatisierung von 15 - 25° C, 98 - 75 % relative Luftfeuchtigkeit und eine Luftgeschwindigkeit von 0,3 - 3,5 m/s als zweckmäßig erwiesen.

Als fünfter Schritt im Herstellungsverfahren schließt sich eine Reifephase in einem Klimaraum an. Für diese Reifephase hat sich ein Temperaturbereich von 14 - 18° C bei relativer Luftfeuchtigkeit von 85 - 73 % und einer Luftgeschwindigkeit von 0,2 - 1,4 m/s als zweckmäßig erwiesen.

Die Gesamtverfahrensdauer sollte zweckmäßig bei 4 - 6 Wochen liegen.

Es hat sich dabei überraschend herausgestellt, daß sich die positiven Eigenschaften, insbesondere was Aromagebung, körperliche Konstistenz und Haltbarkeit anbelangt, der verschiedenen eingesetzten Wirkkomponenten im Produkt vereinigen lassen, obwohl ihrer Natur nach die Wirkkomponenten des Weichkäses und die der Starterkulturen gegenläufige Prozesse im Produkt hervorrufen.

## Patentansprüche

1. Rohpökelerzeugnis aus stückigem Fleisch, erhältlich mit Hilfe einer Pökelung mit Salz, insbesondere Lachsschinken, **dadurch gekennzeichnet**, daß das Fleischstück einen durch mit pulverisiertem Weichkäse in einer Pökelung behandelten, proteolytisch und lipolytisch aufgeschlossenen Außenbereich aufweist, der eine Beschimmelung aus einer Edelschimmelkulturenmischung trägt.

2. Rohpökelerzeugnis nach Anspruch 1, **gekennzeichnet durch** einen Aufschluß mittels pulverisiertem Camembert.

3. Rohpökelerzeugnis nach Anspruch 1, **dadurch gekennzeichnet**, daß der Au-ßenbereich des Fleischstückes zusätzlich mittels pH-Wert senkenden Starterkulturen aufgeschlossen ist.

4. Rohpökelerzeugnis nach Anspruch 3, **gekennzeichnet durch** eine Starterkulturenmischung mit Laktobacillus sake und Pediococcus pentosaceus.

5. Rohpökelerzeugnis nach einem der vorhergehenden Ansprüche, **gekennzeichnet durch** eine Edelschimmelkulturmischung aus Penicillium nalgiovense und Penicillium candidum.

6. Verfahren zur Herstellung eines Rohpökelerzeugnisses aus stückigem Fleisch nach Anspruch 1, **dadurch gekennzeichnet**, daß das ausgelöste Fleischstück mit Salz und pulverisiertem Weichkäse gepökelt wird, danach einer Brennphase unterworfen wird, das Fleischstück danach in eine Edelschimmelkultur-Suspension getaucht wird, das Fleischstück dann einer Beschimmelungsphase unterworfen wird und sich dann eine klimatisierte Reifungsphase anschließt.

7. Verfahren nach Anspruch 6, **gekennzeichnet durch** eine Gesamtverfahrensdauer von 4-6 Wochen.

8. Verfahren nach Anspruch 6 oder 7, **dadurch gekennzeichnet**, daß die Fleischstücke je nach Größe mit einer Salzmenge von 40-70 g und einem Weichkäseanteil von 10-50 g gepökelt werden.

9. Verfahren nach einem der Ansprüche 6-8, **dadurch gekennzeichnet**, daß die Fleischstücke unter Verwendung von pulverisiertem Camembert gepökelt werden.

10. Verfahren nach einem der vorhergehenden Verfahrensansprüche, **dadurch gekennzeichnet**, daß die Fleischstücke unter Mitverwendung von pH-Wert senkenden Starterkulturen gepökelt werden.

11. Verfahren nach einem der vorhergehenden Verfahrensansprüche, **dadurch ge**kennzeichnet, daß der pulverisierte Weichkäse in gefrorenem Zustand zugegeben wird.

12. Verfahren nach einem der vorhergehenden Verfahrensansprüche, **dadurch gekennzeichnet**, daß die Brennphase bei Temperaturen von 0-7° C, einer relativen Luftfeuchtigkeit von 90-70 % und einer Luftgeschwindigkeit von 0,2-2 m/s, die Beschimmelungsphase bei Temperaturen von 15-25 °C, 98-75 % relative Luftfeuchtigkeit und einer Luftgeschwindigkeit von 0,3-3,5 m/s sowie die Reifephase bei Temperaturen von 14-18 °C, einer relativen Luftfeuchtigkeit von 85-73 % und Luftgeschwindigkeit von 0,2-1,4 m/s durchgeführt werden.

## Claims

1. Raw cured product of meat in pieces, obtainable using a pickle containing salt, in particular smoked ham, characterized in that the meat piece has an outer region which is treated with pulverized soft cheese in a pickle, is proteolytically and lipolytically digested and bears a coating of a selected mould culture mixture.

2. Raw cured product according to Claim 1, characterized by digestion using pulverized camembert.

3. Raw cured product according to Claim 1, characterized in that the outer region of the meat piece is additionally digested using pH-lowering starter cultures.

4. Raw cured product according to Claim 3, characterized by a starter culture mixture containing Lactobacillus sake and Pediococcus pentosaceus.

5. Raw cured product according to one of the preceding claims, characterized by a selected mould culture mixture of Penicillium nalgiovense and Penicillium candidum.

6. Process for producing a raw cured product of meat in pieces according to Claim 1, characterized in that the detached meat piece is cured with salt and pulverized soft cheese, then subjected to a curing phase, the meat piece is then immersed in a selected mould culture suspension, the meat piece is then subjected to a mould-coating phase and a climate controlled maturing phase then follows.

7. Process according to Claim 6, characterized by an overall process time of 4 - 6 weeks.

8. Process according to Claim 6 or 7, characterized in that the meat pieces, depending on size, are cured with an amount of salt of 40 - 70 g and a soft cheese content of 10 - 50 g

9. Process according to one of claims 6 - 8, characterized in that the meat pieces are cured using pulverized camembert.

10. Process according to one of the preceding process claims, characterized in that the meat pieces are cured using pH-lowering starter cultures.

11. Process according to one of the preceding process claims, characterized in that the pulverized soft cheese is added in the frozen state.

12. Process according to one of the preceding process claims, characterized in that the curing phase is carried out at temperatures of 0 - 7°C, a relative humidity of 90 - 70% and an air velocity of 0.2-2 m/s, the mould-coating phase at temperatures of 15-25°C, 98 - 75% relative humidity and an air velocity of 0.3 - 3.5 m/s and the maturing phase at temperatures of 14 - 18°C, a relative humidity of 85 - 73% and air velocity of 0.2 - 1.4 m/s.

## Revendications

1. Produit salé brut fait de viande en morceaux, obtenu par salage, en particulier porc fumé, caractérisé en ce que le morceau de viande présente une zone extérieure traitée avec un fromage à pâte molle en poudre dans une saumure, et désagrégée protéolytiquement et lipolytiquement, qui porte une couche de moisissures faite d'un mélange de cultures de moisissures de qualité.

2. Produit salé brut selon la revendication 1, caractérisé par une attaque au moyen de camembert en poudre.

3. Produit salé brut selon la revendication 1, caractérisé en ce que la zone extérieure du morceau de viande est attaquée en supplément aux moyens de culture d'amorçage qui abaissent le pH.

4. Produit salé brut selon la revendication 3, caractérisé par un mélange de cultures d'amorçage avec lactobacillus sake et pédiococcus pentosaceus,

5. Produit salé brut selon l'une des revendications précédentes, caractérisé par un mélange de cultures de moisissures de qualité fait de pénicillium nalgiovense et pénicillium candidum.

6. Procédé de fabrication d'un produit salé brut fait de viande en morceaux selon la revendication 1, caractérisé en ce que le morceau de viande défait est salé et traité avec du fromage à pâte molle en poudre, puis est soumis à une phase de cuisson, le morceau de viande est ensuite immergé dans une suspension de culture de moisissures de qualité, le morceau de viande est ensuite soumis à une phase d'application de moisissures qui est ensuite suivie d'une phase de maturation climatisée.

7. Procédé selon la revendication 6, caractérisé par une durée totale du procédé de quatre à six semaines.

8. Procédé selon la revendication 6 ou 7, caractérisé en ce que suivant leur taille, les morceaux de viande sont salés avec une quantité de sel de 40 à 70 grammes et une proportion de fromage à pâte molle de 10 à 50 grammes.

9. Procédé selon l'une des revendications 6 à 8, caractérisé en ce que les morceaux de viande sont salés par utilisation de camembert en poudre.

10. Procédé selon l'une des revendications de procédé précédentes, caractérisé en ce que les morceaux de viande sont salés par utilisation additionnelle de cultures d'amorçage qui abaissent le pH.

11. Procédé selon l'une des revendications de procédé précédentes, caractérisé en ce que le fromage à pâte molle en poudre est ajouté à l'état congelé.

12. Procédé selon l'une des revendications de procédé précédentes, caractérisé en ce que la phase de cuisson est conduite à des température de 0 à 7 °C, sous une hygrométrie relative de 90 à 70 % et une vitesse de l'air de 0,2 à 2 m/s, la phase d'application de moisissures est conduite à des températures de 15 à 25 °C, sous un degré hygrométrique relatif de 98 à 75 % et à une vitesse de l'air de 0,3 à 3,5 m/s, et la phase de maturation est conduite à des températures de 14 à 18 °C, sous un degré hygrométrique relatif de 85 à 73 % et avec une vitesse de l'air de 0,2 à 1,4 m/s.
